# EUROPEAN PATENT SPECIFICATION

(11) **EP 4 316 914 B1**
(45) Date of publication and mention of the grant of the patent: **10.06.2026**
(21) Application number: 23188766.2
(22) Date of filing: 31.07.2023
(51) Int. Cl.: B60R 7/04

(54) **CENTER CONSOLE SYSTEM AND ASSEMBLY METHOD**
MITTELKONSOLENSYSTEM UND MONTAGEVERFAHREN
SYSTÈME DE CONSOLE CENTRALE ET PROCÉDÉ D'ASSEMBLAGE

(30) Priority: 02.08.2022 ES 202230718
(43) Date of publication of application: 07.02.2024
(73) Proprietor: Seat, S.A., 08760 Martorell (ES)
(72) Inventor: ROSELLÓ ROIG, Núria, 08760 MARTORELL (ES); MALDONADO ESTEBAN, Carlos, 08760 MARTORELL (ES)
(74) Representative: Pons IP

(56) References cited:
- EP-B1- 2 804 782
- WO-A1-2020/058143
- DE-A1- 102021 120 041

## Description

### Technical field

The present invention relates, in a first aspect, to a vehicle with a center console system, particularly wherein the console is linked both to the floor of the passenger compartment and to the dashboard of the vehicle.

A second aspect of the present invention relates to an assembly method for assembling the center console system of the first aspect of the invention.

### Prior state the art

Different types of center consoles configured to be linked to the floor of the passenger compartment are known, such as the one disclosed in document US5106143A, which includes fixing components for fixing to the floor of the vehicle, said components being snap-fit. However, these fixing components would not make it possible to overcome the manufacturing tolerances of the pieces if the center console also had to be linked to the dashboard. Nor would center console systems with trim pieces covering the frame or fixing components of the type disclosed in documents EP0047858A1 and US9308871B2 overcome said tolerances.

Document WO2020058143 A1 relates to a center console (10, 20, 110, 120, 160, 1002), comprising at least a storage surface (14, 24), a cover (152), a monitor, an operating panel and/or a touchscreen (15, 25, 1007), between two seats (3, 103, 1003a, 1003b) in a motor vehicle. The center console (10, 20, 110, 120, 160, 1002) can be moved from a first usage state in a first position into a second usage state in a second position. The position of the storage surface (14, 24), of the cover (152), of the monitor, of the operating panel and/or of the touchscreen (15, 25, 1007) changes between the first usage state and the second usage state. In the second usage state, the center console (10, 20, 110, 120, 160, 1002) leaves a free space between the seats (3, 103, 1003a, 1003b).

Document DE102021120041A1 discloses a vehicle with a center console system according to the pre-amble of claim 1, wherein the center console is also a portable storage device. The portable storage device includes a stay unit mounted on a personal vehicle or a general vehicle, a storage unit, which is portable and is selectively mounted on the stay unit, and a coupling unit, which is disposed at the stay unit so as to couple the storage unit to the stay unit.

### Description of the invention

The present invention relates, according to a first aspect, to a vehicle with a center console system as defined by the features of claim 1, that allows manufacturing and assembly tolerances to be offset, both between the lower part of the console and the floor of the passenger compartment and between the front part of the console and the dashboard. In addition, according to a second aspect, it proposes an assembly method for assembling the center console that can be carried out in a few steps, in a very short period of time, and without the need for additional tools during the positioning steps between the center console, the floor of the passenger compartment of the vehicle and the dashboard of said vehicle.

With the present configuration of the center console system, it is possible to vertically move the front portion of the structural body, according to a pivoting movement, for linking the same with the dashboard. In this way and as a result of the same, the linkage of the structural body is allowed up to a final assembly position that contacts both the floor of the passenger compartment and the dashboard, making it possible to offset or absorb the tolerances existing at the attachment of said structural body with respect to the dashboard, especially in cases where the design of the dashboard comprises a protrusion or spine projected in a diagonal direction, intended to be linked with the structural body. The technical effect obtained by the present invention is, therefore, to avoid visual defects in the center console, while ensuring contact between the center console and the dashboard for the mechanical linkage thereof, regardless of the manufacturing tolerances of the different components that make up said system and regardless of the assembly tolerances that may occur during the assembly of said components.

According to the invention, one of the pivoting linkage means (preferably those of the first anchoring piece) comprise two guides that extend in said longitudinal direction, that is, parallel to said sagittal plane in the forward movement direction of the vehicle. In turn, the other pivoting linkage means (preferably those of the structural body) comprise two coaxial pivots that extend perpendicular to said sagittal plane, sized to form a single pivot axis and slide through said guides, so that the pivoting linkage occurs in any of the positions of the pivots in the respective guides.

Preferably, each guide extends on a lateral side of the first anchoring piece, both guides being mutually symmetrical to one another according to said sagittal plane, while said pivots are located at the lower end of the structural body. Even more preferably, each guide defines an elongated slot in said longitudinal direction, the height of the slots being substantially equal to the dimensions of the pivots, such that the slots restrict the vertical movement of the pivots. Consequently, when each pivot is coupled to the respective guide, said guide limits the displacement of the structural body both in the vertical direction and in the extension direction of the pivots, that is, in the transverse direction perpendicular to said longitudinal direction. In this way, the structural body, once coupled to the first anchoring piece through the pivotal linkage means, comprises two degrees of freedom: a displacement according to the longitudinal direction and a rotation or pivot in each of the different displacement positions along said longitudinal direction. In this way, the center console can be displaced in the longitudinal direction until it approaches the dashboard and can pivot, according to its sagittal plane, to contact the dashboard. Consequently, the coupling between said guides and said coaxial pivots limits the vertical displacement of the rear area of the structural body of the center console. In turn, it also limits the transverse displacement of said rear area of the structural body of the center console. Once the center console is positioned in its final position according to said longitudinal forward movement direction of the vehicle, the center console assembly can be pivoted on a pivot axis according to the transverse direction, allowing the front part of said center console to be displaced vertically according to a pivoting movement to make contact with the dashboard.

Optionally, at least one of the guides comprises a funnel-shaped entry (that is, the end of the guide through which the respective pivot enters, said end being the furthest from the dashboard of the vehicle), provided with an access opening the vertical dimension of which is greater than that of the respective pivot and of a transition section the vertical dimension of which decreases from that of the access opening to that of said elongated slot as it extends longitudinally from the access opening to said elongated slot. In this way, the linking of the structural body with the first anchoring piece is facilitated, without the need for visual contact by the operator during the process of handling the structural body with respect to the first anchoring piece, specifically, during the process of introducing each pivot in its respective access opening of the guide.

Preferably, the center console system also comprises a second anchoring piece configured to be anchored to the floor of the passenger compartment. This second anchoring piece and the front portion of the structural body comprise respective spring linkage means. Specifically, these spring linkage means are suitable for being linked together, with a vertical pressure being exerted such that it generates an upward displacement of the front portion of the structural body with respect to the floor of the passenger compartment. As a result, a height adjustment of the front portion of the structural body is allowed to offset possible tolerances in the mechanical linkage with the dashboard.

In a possible embodiment, respective spring linkage means are configured to interlock with each other and deflect the front portion of the structural body in an upward direction as the structural body is displaced horizontally forward, according to the longitudinal direction of displacement, with respect to the floor of the passenger compartment. For example, one of the spring linkage means (preferably those of the second anchoring piece) comprise a semi-rigid flange with at least one oblique portion forming a ramp (such as a pyramid-shaped cantilever) and the other spring linking means (following the same example, preferably those of the structural body) comprise a rigid surface that deflects the front portion of the structural body in an upward direction when displaced forward and colliding with said ramp. In this way, the displacement movement in the longitudinal direction of the center console is utilized (when it is displaced along the guides of the pivoting linkage means) to vertically push the front portion of the center console, to make contact with the dashboard. Said upward movement of the front portion of the center console is possible as a result of the pivotal movement allowed by the pivotal linkage means.

As discussed, the front portion of the structural body is configured to be fixed to the dashboard, either at its upper end and/or at its front end. In a preferred embodiment, the structural body comprises:
- a frame piece, which is the one provided with one of said pivoting linkage means (and optionally with one of said spring linkage means), and
- at least one upper trim piece, mechanically linked to the frame piece and covering at least an upper part thereof (preferably the entire upper part of the frame piece).

In this last embodiment, the front and/or upper ends, both of the upper trim piece and of the frame piece (which can comprise a projection that extends inside the at least one upper trim piece) can be configured to contact and be fixed to the dashboard.

In a possible embodiment, the center console system comprises at least one perimeter trim piece configured to be mechanically linked to the structural body and cover at least a perimeter portion of the structural body. To do this, an upper portion of the structural body comprises an overlapping flange arranged perimetrally and projecting downwards (generating a cavity suitable for housing a flange), while the upper end of the at least one perimeter trim piece comprises an overlapping flange projected upwards (for example, I-shaped or L-shaped) and sized to fit snugly on the inner side of said overlapping flange. Likewise, said overlapping tab is vertically sized to be at least partially covered by the overlapping tab in any displacement position of the at least one perimeter trim piece with respect to the structural body, while the at least one perimeter trim piece is sized to cover said at least one perimeter portion of the structural body from the floor of the passenger compartment to the overlapping flange. As a result of the present configuration, the at least one perimeter trim piece is vertically displaceable with respect to the structural body, but without separating from it, whereby making it possible to adjust the height of the structural body with respect to the floor of the passenger compartment without the at least one piece trim separating from said floor, thus being able to overcome possible vertical tolerances, such as, for example, between the structural body and the dashboard.

Complementary to the previously described embodiment, at least one non-visible side of the at least one perimeter trim piece comprises U-shaped transverse protrusions, as transverse retention means configured to retain flanges in the horizontal direction perpendicular to said longitudinal direction. In turn, the structural body, specifically its frame piece, comprises inverse L-shaped transverse flanges. Said U-shaped transverse protrusions are sized in height to receive said transverse flanges loosely in the vertical direction, while they are sized in width to receive the transverse flanges snugly therein in the transverse direction. In this way, they block the relative movement of the at least one perimeter trim piece with respect to the structural body in a substantially transverse direction, that is, perpendicular to the sagittal plane of the structural body, while allowing relative displacement both vertically and in the longitudinal forward movement direction of the vehicle.

Preferably, the structural body and at least one non-visible side of the at least one perimeter trim piece comprise respective pivoting means arranged laterally and configured to be pivotally anchored to each other, allowing the at least one perimeter trim piece to pivot with respect to the structural body in said sagittal plane. These pivot means can be both at the front part and at the rear part of the center console system, although they are preferably at the rear part. As an option, one of the pivot means comprise a rotation gap that extends in a transverse direction of the passenger compartment (that is, perpendicular to the sagittal plane), and the other pivot means comprise a respective rotation pivot sized to pivot about said rotation gap.

Optionally, the second anchoring piece and at least one non-visible side of the at least one perimeter trim piece comprise respective vertical retention means, located far from said pivot means (preferably located in the front part of the center console system, in accordance with the preferred position of said pivot means). The vertical retention means are configured to be retained vertically with respect to one another, such that the portion of the at least one perimeter trim piece in which they are located is fixed against the floor of the passenger compartment. Preferably, one of the vertical retention means comprise a longitudinal guide and the other vertical retention means comprise, in a position coinciding with said longitudinal guide, a transverse pivot, suitable for being retained vertically in the longitudinal guide. Even more preferably, the longitudinal guide and/or the transverse pivot comprise an inclined wall portion, configured to generate a downward displacement of the portion of the at least one perimeter trim piece in which it is located when the structural body is displaced forward.

In relation to the assembly of the present center console system, the corresponding assembly method according to the invention, is defined by the features of claim 12.

In the event that the pivoting linkage means of the central console system have the guides and pivots described above, step a) would consist of placing the pivots at the entrance of the respective guides and pushing the structural body, dragging it along the floor of the passenger compartment. according to a longitudinal forward movement direction of the vehicle until contacting the front portion of the structural body with the dashboard or, by default, up to a longitudinal displacement position such that the front portion of the central console is aligned with the dashboard to subsequently pivot the structural body in its sagittal plane until contacting the front portion of the structural body with the dashboard. Thus, and especially for those center console and dashboard designs where contact and mechanical linkage occur only at the upper surface of the front portion of the center console, contact between the two occurs only once the pivoting movement of the structural body with respect to the floor of the passenger compartment has been carried out.

On the other hand, in the event that the center console system has said second anchoring piece and the previously described spring linkage means, steps a) and b) would be carried out simultaneously, the pivoting movement occurring due to the vertical pressure exerted by the spring linkage means. The necessary action by the operator is simplified, requiring that said operator only carry out a dragging movement of the center console with respect to the floor of the passenger compartment, fitting the pivots at the entry of each guide and pushing the structural body along the guides, until the front portion of the center console contacts the second anchoring piece.

Likewise, in the event that the center console system has at least one perimeter trim piece as described above, the method could comprise an initial step of placing the at least one perimeter trim piece on the structural body prior to said step a). The positioning of said at least one perimeter trim piece with respect to the structural body would be carried out simultaneously with the dragging and pivoting movement of the structural body, so that regardless of the positions of the structural body, the at least one perimeter trim piece contacts the floor of the passenger compartment of the vehicle.

### Brief description of the drawings

The foregoing and other advantages and features will be more fully understood from the following detailed description of exemplary embodiments with reference to the accompanying drawings, which should be considered by way of illustration and not limitation, wherein:
Figure 1 illustrates a side view of the first anchoring piece and the second anchoring piece of the present center console system, anchored to the floor of the passenger compartment of a vehicle, as well as an exemplary embodiment of the structural body not yet linked to said anchoring pieces, made up of a frame piece and an upper trim piece.
Figure 2 illustrates an enlarged perspective view of the first anchoring piece of Figure 1.
Figure 3 illustrates an enlarged rear view of the pivoting linkage means for the frame piece and the first anchoring piece of Figure 1.
Figure 4 illustrates a side view of the center console system, wherein the center console already has the perimeter trim piece covering the structural body, but wherein the center console is not yet fixed to said first and second anchoring pieces.
Figure 5 illustrates an enlarged view of the second anchoring piece of Figure 1 or Figure 4.
Figure 6 illustrates an enlarged view of the spring linkage means of the structural body and the second anchoring piece of Figure 1, wherein the front portion of the structural body has been vertically displaced upwards by the pressure exerted by the second anchoring piece.
Figure 7 illustrates a view of the center console system in its use condition, wherein the center console is already fixed to said first and second anchoring pieces.
Figure 8 illustrates a longitudinal section view of detail F8 indicated in Figure 7, showing the overlapping flange of the structural body and the overlapping flange of the perimeter trim piece.
Figure 9 illustrates a longitudinal section view of detail F9 indicated in Figure 7, showing transverse retention means for the frame piece and the perimeter trim piece.
Figure 10 illustrates a longitudinal section view of detail F10 indicated in Figure 7, showing the pivot means of the structural body and the perimeter trim piece.
Figure 11 illustrates an enlarged side view of the pivot means of the perimeter trim piece of Figure 10.
Figure 12 illustrates an enlarged side view of the pivot means of the frame piece of Figure 10.
Figure 13 illustrates an enlarged side view of the vertical retention means of the perimeter trim piece.
Figure 14 illustrates a longitudinal section view of detail F14 indicated in Figure 7, showing the vertical retention means for the second anchoring piece and the perimeter trim piece.

### Detailed description of an exemplary embodiment

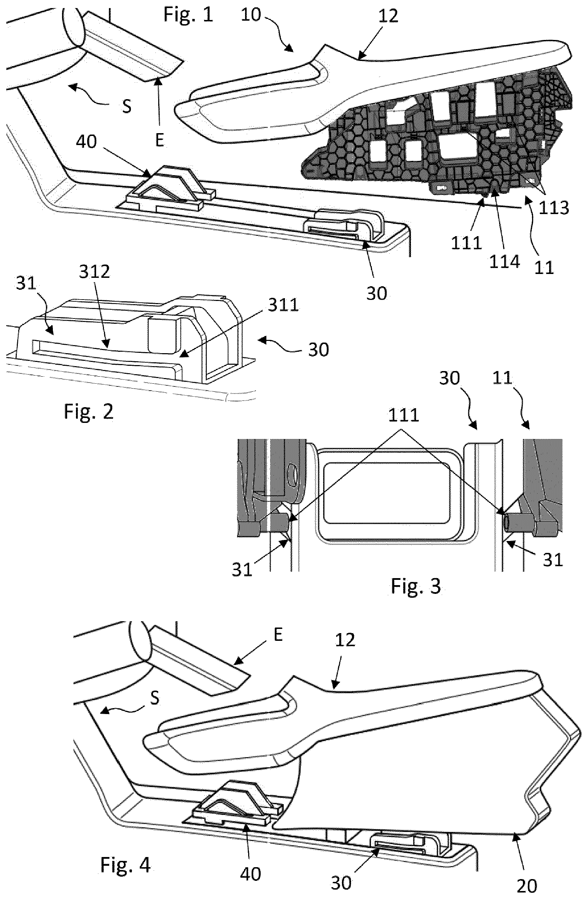

Figure 1 illustrates the structural body (10) of the center console, that is, of the center console without the perimeter trim piece (20). Here, the structural body (10) is defined by a frame piece (11) and by an upper trim piece (12) mechanically linked to each other, such that both parts are displaced together. This Figure 1 also shows a portion of the dashboard (S), in the front part of the passenger compartment, as well as the first anchoring piece (30) and the second anchoring piece (40) already fixed to the floor of the passenger compartment of the vehicle.

Here, the upper trim piece (12) is configured to be fixed both to the dashboard (S) and to a spine (E) that protrudes from the dashboard (S). In any case, there is a mechanical linkage between the upper trim piece (12) and the dashboard (S), which requires contact between both components to cause said mechanical linkage.

In turn, the frame piece (11) comprises two pivots (111) at its lower end, specifically, in the rear portion of said frame piece (11), one on each side and coaxial (visible in detail in Figure 3), which extend outwards, that is, in opposite directions and in a direction perpendicular to the sagittal plane of the structural body (10), as pivotal linkage means suitable for being linked to the first anchoring piece (30).

Figure 2 shows the first anchoring piece (30) in detail, which, in turn, comprises a guide (31) on each lateral side that extends in said longitudinal direction, as pivoting linkage means suitable for housing a respective pivot (111) of the frame piece (11). Both guides (31) are symmetrical with respect to the sagittal plane of the first anchoring piece (30). In turn, these guides (31) are defined by:
- an access opening (311) the vertical dimension of which is greater than that of the pivots (111),
- an elongated slot (312) in said longitudinal direction, the vertical dimension of which is substantially equal to the dimensions of the pivots (111), so as to restrict the vertical displacement of the pivot (111) that is inserted in it, and
- a transition section the vertical dimension of which decreases from that of the access opening (311) to that of the elongated slot (312) as it extends longitudinally from the access opening (311) to said elongated slot (312).

Therefore, the pivots (111) and the guides (31) are configured to be pivotally linked to each other, with the intention of allowing the structural body (10) to pivot in its sagittal plane with respect to the floor or dashboard of the vehicle. As can be seen in Figure 3, the pivots (111) are sized to form a single pivot axis, as well as to be inserted and slid through said guides (31), so that the pivoting linkage occurs in any of the positions of the pivots (111) in the respective guides (31).

As a result of the configuration of these pivoting linkage means, the linkage of the structural body (10) with the first anchoring piece (30) is facilitated, without requiring visual contact by the operator during the process of handling the structural body (10) with respect to the first anchoring piece (30). This is advantageous when the center console system comprises a perimeter trim piece (20) covering the frame piece (11), as depicted in Figure 4.

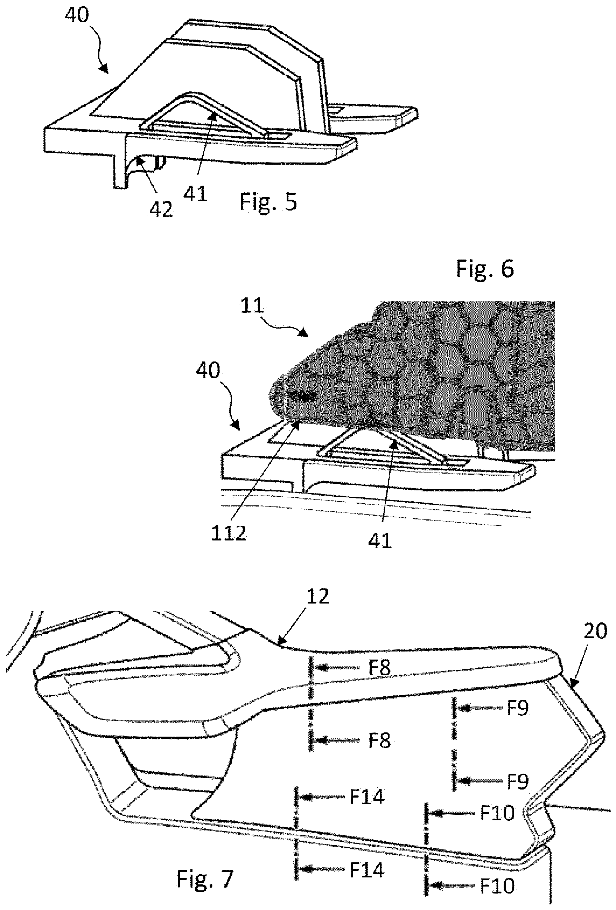

As mentioned, the present embodiment of the center console system also comprises a second anchoring piece (40) anchored to the floor of the passenger compartment. As can be seen in Figure 5, the second anchoring piece (40) comprises a cantilevered, pyramid-shaped semi-rigid flange (41), that is, provided with an oblique portion that forms a ramp, as spring linkage means. In turn, as can be seen in Figure 6, the front part of the frame piece (11) comprises a rigid surface (112) at its lower end, as spring linkage means configured to collide with said semi-rigid flange (41) as the structural body (10) is displaced forward in its longitudinal displacement movement guided by the first anchoring piece (30). Given the ramp shape, the semi-rigid flange (41) exerts such vertical pressure that it deflects the front part of the frame piece (11) in an upward direction and keeps it vertically raised. In this way, in a single dragging movement by the operator of the structural body (10) of the center console, said longitudinal displacement being guided by the guides (31) of the first anchoring piece (30), an upward movement of the front portion of said center console occurs simultaneously, due to the vertical pushing generated by the contact between the semi-rigid tab (41) in the form of a ramp and the rigid surface (112). Said vertical displacement of the front portion of the center console is allowed by the rotational movement between the pivots (111) and the guides (31) in the rear portion of said center console.

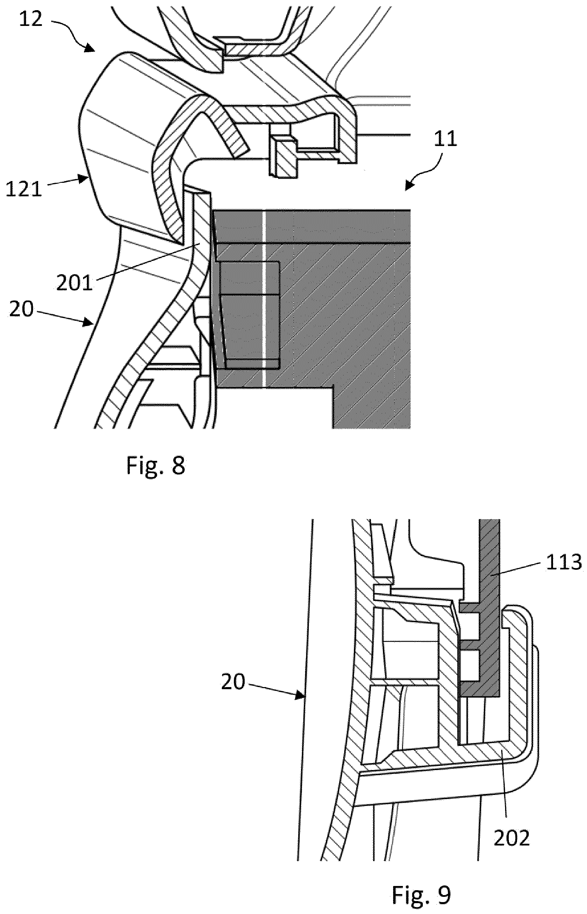

As illustrated in Figures 4 and 7, the center console also comprises a perimeter trim piece (20) configured to cover the perimeter part of the frame piece (11) that is not covered by the upper trim piece (12). ). As can be seen in Figure 8, the upper trim piece (12) comprises an overlapping flange (121) arranged perimetrally and projecting downwards, generating a cavity suitable for housing a flange. In turn, the upper end of the perimeter trim piece (20) comprises an overlapping tab (201) projected upwards and sized to fit snugly on the inner side of said overlapping tab (121). Likewise, said overlapping tab (201) is vertically sized to remain, at least partially, inside the overlapping tab (121) in a wide vertical displacement range of the perimeter trim piece (20) with respect to the upper trim piece (12), while the perimeter trim piece (20) is sized to cover the frame piece (11) from the floor of the passenger compartment to the overlapping flange (121). Thus, in the event of an upward movement of the assembly formed by the frame (11) and the upper trim piece (12), the at least one perimeter trim piece (20) must remain in contact with the floor of the passenger compartment. Otherwise, it would generate a poor visual and aesthetic finish. To this end, the relative displacement in said vertical axis is allowed between the perimeter trim piece (20) and the upper trim piece (12) so that, in any of the relative displacement positions, the upper end of the overlapping piece ( 201) is covered by the overlapping tab (121), avoiding the generation of a slot, cavity, or gap in said area that generates a poor visual or aesthetic finish.

Also in this embodiment, the non-visible side of the perimeter trim piece (20) comprises several U-shaped transverse projections (202), as transverse retention means configured to retain tabs in the horizontal direction and perpendicular to said longitudinal direction, as depicted in Figure 9. In turn, the structural body (10), specifically its frame piece (11) in this embodiment, comprises inverse L-shaped transverse flanges (113). Said U-shaped transverse projections (202) are sized in height similar to the dimension of said overlapping tab (201), to have an equivalent tolerance in the vertical connection thereof, while they are sized in width to receive the transverse flanges (113) snugly therein in the transverse direction. In this way, they only block the relative movement of the perimeter trim piece (20) with respect to the structural body (10) in the transverse direction, while allowing relative movement in any direction within the plane perpendicular to said transverse direction.

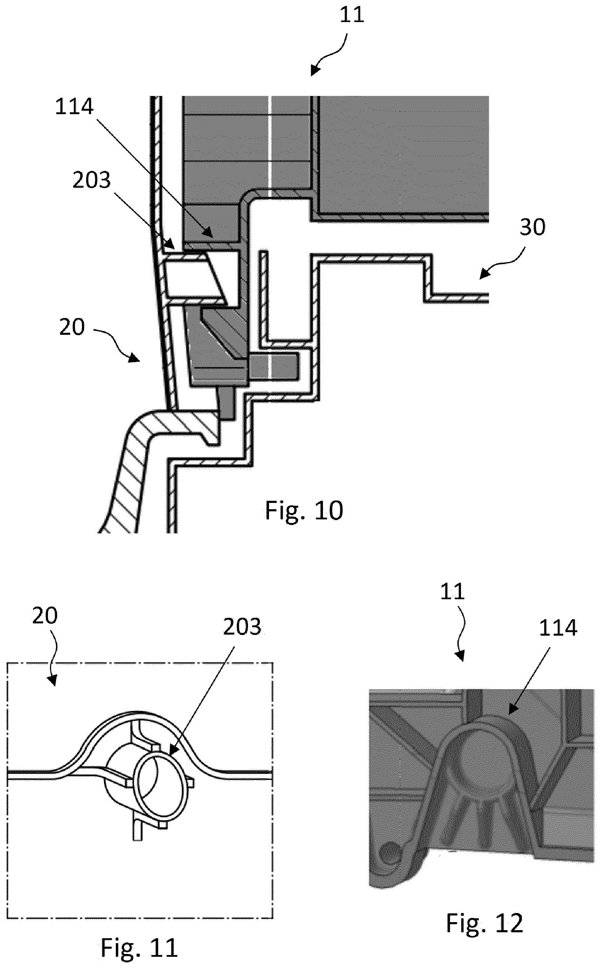

Additionally, in this embodiment, each side of the rear part of the frame piece (11) comprises a rotation gap (114), as pivot means to guide a rotational movement of the perimeter trim piece (20), one of them shown in Figures 10 and 12, which extends in the transverse direction of the passenger compartment and defining an axis of rotation in said same transverse direction of the passenger compartment. At the same time, each non-visible side of the perimeter trim piece (20) comprises respective rotation pivots (203), as corresponding pivot means, one of them shown in Figures 10 and 11. These rotation pivots (203) are configured to pivot around said rotation gap (114), allowing the perimeter trim piece (20) to pivot with respect to the structural body (10) in said sagittal plane. Said rotation gaps (114) and said rotation pivots (203) are arranged in a rear portion of, respectively, the frame piece (11) and the perimeter trim piece (20), linking both components according to a single degree of freedom, e.g., said rotation in the transverse direction of the passenger compartment. In this way, the front portion of both components is allowed to have said relative displacement with respect to each other, especially in the vertical direction, in order to offset the manufacturing and assembly tolerances of the assembly formed by the center console, the dashboard of the vehicle and the floor of the passenger compartment of the vehicle.

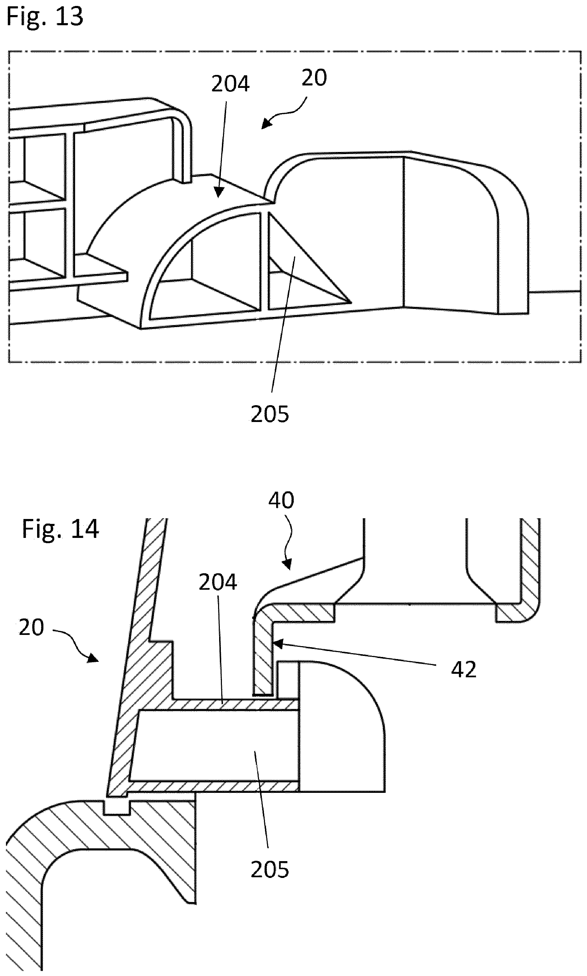

As can be seen in Figures 4 and 5, the second anchoring piece (40) comprises a lower recess as a longitudinal guide (42). In turn, as can be seen in Figures 13 and 14, the perimeter trim piece (20) comprises, on each non-visible side and in a position coinciding with said longitudinal guide (42) in its use condition, transverse pivots (204) as retaining means, capable of being retained under the longitudinal guide (42). In this way, the front part of the perimeter trim piece (20) does not separate from the floor, regardless of the position in which the frame piece (11) is located with respect to the floor. Specifically, the transverse pivots (204) of this embodiment comprise an inclined wall portion (205), configured to facilitate its placement in the longitudinal guide (42) while generating a downward displacement of the front part of the perimeter trim piece (20) when the structural body (10) is displaced forward, forcing said longitudinal guide (42) of the perimeter trim piece (20) to be located below the longitudinal guide (42) of the second anchoring piece (40). ).

The center console system of the present invention allows that, in the event of a dragging movement of the center console in a longitudinal displacement approaching the dashboard (S), a simultaneous movement of the front portion of said center console is generated such that it pivots and makes an upward movement so that the upper trim piece (12) contacts said dashboard (S), and a simultaneous movement of the front portion of the perimeter trim piece (20) is generated such that it pivots and makes a downward movement to contact the floor of the passenger compartment. In this way, it is ensured that there is contact between the center console, the floor of the passenger compartment and the dashboard (S) so that there is a mechanical linkage between them, but at the same time, no gaps or slots are generated between them that produce visual or aesthetic defects.

## Claims

1. Vehicle comprising a center console system, the vehicle being of the type comprising a passenger compartment and a dashboard (S) at the front part of the passenger compartment, the center console system comprising:
- a first anchoring piece (30) anchored to the floor of the passenger compartment,
- a center console comprising a structural body (10), which is defined by a front portion and a rear portion, wherein the front portion is configured to be fixed to the dashboard (S),
wherein the first anchoring piece (30) and the rear portion of the structural body (10) comprise respective pivotal linkage means configured to be pivotally linked to each other, which allow the structural body (10) to pivot in its sagittal plane and, according to a pivoting movement, vertically displace the front portion of the structural body (10) for linking the same with the dashboard (S), the center console system being **characterized in that** one of the pivoting linkage means comprise two guides (31) that extend in a longitudinal direction of the structural body (10) and the other pivotal linkage means comprise two coaxial pivots (111) that extend perpendicular to said longitudinal direction, sized to form a single pivot axis and slide through said guides (31), so that the pivoting linkage occurs in any of the positions of the pivots (111) in the respective guides (31).

2. Vehicle comprising a center console system according to claim 1, wherein each guide (31) extends on a lateral side of the first anchoring piece (30), both guides (31) being symmetrical to each other according to said sagittal plane.

3. Vehicle comprising a center console system according to claim 2, wherein each guide (31) defines an elongated slot (312) in said longitudinal direction, the height of said slot (312) being substantially equal to the dimensions of the respective pivot (111), such that the slots (312) restrict the vertical displacement of the pivots (111).

4. Vehicle comprising a center console system according to claim 3, wherein at least one guide (31) comprises a funnel-shaped entry, provided with an access opening (311) the vertical dimension of which is greater than that of the respective pivot (111) and with a transition section the vertical dimension of which decreases from that of the access opening (311) to that of said elongated slot (312) as it extends longitudinally from the access opening (311) to said elongated slot (312).

5. Vehicle comprising a center console system according to any of the preceding claims, comprising a second anchoring piece (40) configured to be anchored to the floor of the passenger compartment, wherein the front portion of the structural body (10) and the second anchoring piece (40) comprise respective spring linkage means suitable for being linked together, with a vertical pressure being exerted such that it generates an upward displacement of the front portion of the structural body (10) with respect to the floor of the passenger compartment.

6. Vehicle comprising a center console system according to claim 5, wherein respective spring linkage means are configured to interlock with each other and deflect the front portion of the structural body (10) in an upward direction as the structural body (10) is displaced horizontally forward with respect to the floor of the passenger compartment.

7. Vehicle comprising a center console system according to any of claims 5 to 6, wherein one of the spring linkage means comprise a semi-rigid flange (41) with at least one oblique portion forming a ramp and the other spring linkage means comprise a rigid surface (112).

8. Vehicle comprising a center console system according to any of the preceding claims, wherein said at least one portion of the front portion of the structural body (10) configured to be fixed to the dashboard (S) is arranged at an upper end of the structural body (10).

9. Vehicle comprising a center console system according to any of the preceding claims, wherein said at least one portion of the front portion of the structural body (10) configured to be fixed to the dashboard (S) is arranged at a front end of the structural body (10).

10. Vehicle comprising a center console system according to any of the preceding claims, wherein the structural body comprises:
- a frame piece (11), which is provided with one of said pivotal linkage means, and
- at least one upper trim piece (12) mechanically linked to the frame piece (11) and covering at least an upper part thereof.

11. Vehicle comprising a center console system according to claim 11, wherein the front portion of the frame piece (11) is configured for linking the same with the dashboard (S).

12. Assembly method carried out to assemble a center console system as described in any of the preceding claims in the passenger compartment of a vehicle with a dashboard, **characterized in that** it comprises the steps of:
a) inserting the coaxial pivots (111) in the corresponding guides (31) to link the first anchoring piece (30) to the structural body (10), and
b) pivoting the structural body (10) in its sagittal plane until contacting the front portion of said structural body (10) with the dashboard (S) for linking the same with said dashboard (S).

13. Assembly method according to claim 12 of a center console system as described in claim 2, wherein step a) consists of placing the pivots (111) at the entry of respective guides (31) and pushing the structural body (10) by dragging it along the floor of the passenger compartment according to a longitudinal of the vehicle until contacting the front portion of the structural body (10) with the dashboard (S).

14. Assembly method according to claim 13 carried out for a center console system as described in claim 6 or 7, wherein steps a) and b) are carried out simultaneously, the pivot movement being caused by the vertical pressure exerted by respective spring linkage means to each other.

## Patentansprüche

1. Fahrzeug, umfassend ein Mittelkonsolensystem, wobei das Fahrzeug von der Art ist, umfassend einen Fahrgastraum und ein Armaturenbrett (S) an dem vorderen Teil des Fahrgastraums, das Mittelkonsolensystem umfassend:
- ein erstes Verankerungsstück (30), das an dem Boden des Fahrgastraums verankert ist,
- eine Mittelkonsole, umfassend einen Strukturkörper (10), der durch einen vorderen Abschnitt und einen hinteren Abschnitt definiert ist, wobei der vordere Abschnitt konfiguriert ist, um an dem Armaturenbrett (S) befestigt zu sein,
wobei das erste Verankerungsstück (30) und der hintere Abschnitt des Strukturkörpers (10) jeweilige schwenkbare Verbindungsmittel umfassen, die konfiguriert sind, um schwenkbar miteinander verbunden zu sein, die dem Strukturkörper (10) ermöglichen, in seiner Sagittalebene zu schwenken und, gemäß einer Schwenkbewegung, den vorderen Abschnitt des Strukturkörpers (10) vertikal zu verlagern, zum Verbinden desselben mit dem Armaturenbrett (S), wobei das Mittelkonsolensystem **dadurch gekennzeichnet ist, dass** eines der schwenkbaren Verbindungsmittel zwei Führungen (31) umfasst, die sich in einer Längsrichtung des Strukturkörpers (10) erstrecken, und die anderen schwenkbaren Verbindungsmittel zwei koaxiale Schwenkelemente (111) umfassen, die sich senkrecht zu der Längsrichtung erstrecken, bemessen, um eine einzige Schwenkachse auszubilden und durch die Führungen (31) zu gleiten, sodass die schwenkbare Verbindung in einer beliebigen der Positionen der Schwenkelemente (111) in den jeweiligen Führungen (31) erfolgt.

2. Fahrzeug, umfassend ein Mittelkonsolensystem nach Anspruch 1, wobei sich jede Führung (31) auf einer lateralen Seite des ersten Verankerungsstücks (30) erstreckt, wobei beide Führungen (31) gemäß der Sagittalebene zueinander symmetrisch sind.

3. Fahrzeug, umfassend ein Mittelkonsolensystem nach Anspruch 2, wobei jede Führung (31) einen länglichen Schlitz (312) in der Längsrichtung definiert, wobei die Höhe des Schlitzes (312) im Wesentlichen derart gleich den Abmessungen des jeweiligen Schwenkelements (111) ist, dass die Schlitze (312) die vertikale Verschiebung der Schwenkelemente (111) beschränken.

4. Fahrzeug, umfassend ein Mittelkonsolensystem nach Anspruch 3, wobei mindestens eine Führung (31) einen trichterförmigen Eingang umfasst, der mit einer Zugangsöffnung (311) versehen ist, deren vertikale Abmessung größer als die des jeweiligen Schwenkelements (111) ist, und mit einem Übergangsabschnitt, dessen vertikale Abmessung von der der Zugangsöffnung (311) zu der des länglichen Schlitzes (312) abnimmt, während er sich längs von der Zugangsöffnung (311) zu dem länglichen Schlitz (312) erstreckt.

5. Fahrzeug, umfassend ein Mittelkonsolensystem nach einem der vorstehenden Ansprüche, umfassend ein zweites Verankerungsstück (40), das konfiguriert ist, um an dem Boden des Fahrgastraums verankert zu sein, wobei der vordere Abschnitt des Strukturkörpers (10) und das zweite Verankerungsstück (40) jeweilige Federverbindungsmittel umfassen, die geeignet sind, um miteinander verbunden zu werden, wobei ein vertikaler Druck derart ausgeübt wird, dass er eine Aufwärtsverschiebung des vorderen Abschnitts des Strukturkörpers (10) in Bezug auf den Boden des Fahrgastraums erzeugt.

6. Fahrzeug, umfassend ein Mittelkonsolensystem nach Anspruch 5, wobei jeweilige Federverbindungsmittel konfiguriert sind, um sich miteinander zu verriegeln und den vorderen Abschnitt des Strukturkörpers (10) in eine Aufwärtsrichtung abzulenken, wenn der Strukturkörper (10) horizontal nach vorne in Bezug auf den Boden des Fahrgastraums verschoben wird.

7. Fahrzeug, umfassend ein Mittelkonsolensystem nach einem der Ansprüche 5 bis 6, wobei eines der Federverbindungsmittel einen halbstarren Flansch (41) mit mindestens einem schrägen Abschnitt umfasst, der eine Rampe ausbildet, und das andere Federverbindungsmittel eine starre Oberfläche (112) umfasst.

8. Fahrzeug, umfassend ein Mittelkonsolensystem nach einem der vorstehenden Ansprüche, wobei der mindestens eine Abschnitt des vorderen Abschnitts des Strukturkörpers (10), der konfiguriert ist, um an dem Armaturenbrett (S) befestigt zu sein, an einem oberen Ende des Strukturkörpers (10) angeordnet ist.

9. Fahrzeug, umfassend ein Mittelkonsolensystem nach einem der vorstehenden Ansprüche, wobei der mindestens eine Abschnitt des vorderen Abschnitts des Strukturkörpers (10), der konfiguriert ist, um an dem Armaturenbrett (S) befestigt zu sein, an einem vorderen Ende des Strukturkörpers (10) angeordnet ist.

10. Fahrzeug, umfassend ein Mittelkonsolensystem nach einem der vorstehenden Ansprüche, wobei der Strukturkörper umfasst:
- ein Rahmenstück (11), das mit einem der Schwenkverbindungsmittel versehen ist, und
- mindestens ein oberes Verkleidungsstück (12), das mit dem Rahmenstück (11) mechanisch verbunden ist und mindestens einen oberen Teil davon abdeckt.

11. Fahrzeug, umfassend ein Mittelkonsolensystem nach Anspruch 11, wobei der vordere Abschnitt des Rahmenteils (11) zum Verbinden desselben mit dem Armaturenbrett (S) konfiguriert ist.

12. Montageverfahren, das ausgeführt wird, um ein Mittelkonsolensystem, wie in einem der vorstehenden Ansprüche beschrieben, in dem Fahrgastraum eines Fahrzeugs mit einem Armaturenbrett zu montieren,
**dadurch gekennzeichnet, dass** es die Schritte umfasst:
a) Einsetzen der koaxialen Schwenkelemente (111) in die entsprechenden Führungen (31), um das erste Verankerungsstück (30) mit dem Strukturkörper (10) zu verbinden, und
b) Schwenken des Strukturkörpers (10) in seiner Sagittalebene, bis der vordere Abschnitt des Strukturkörpers (10) das Armaturenbrett (S) berührt, um denselben mit dem Armaturenbrett (S) zu verbinden.

13. Montageverfahren nach Anspruch 12 eines Mittelkonsolensystems wie in Anspruch 2 beschrieben, wobei Schritt a) darin besteht, die Schwenkelemente (111) an dem Eingang jeweiliger Führungen (31) zu platzieren und den Strukturkörper (10) durch ein Ziehen davon entlang des Bodens des Fahrgastraums gemäß einer Längsrichtung des Fahrzeugs zu schieben, bis der vordere Abschnitt des Strukturkörpers (10) mit dem Armaturenbrett (S) berührt wird.

14. Montageverfahren nach Anspruch 13, ausgeführt für ein Mittelkonsolensystem wie in Anspruch 6 oder 7 beschrieben, wobei die Schritte a) und b) gleichzeitig ausgeführt werden, wobei die Schwenkbewegung durch den vertikalen Druck verursacht wird, der durch jeweilige Federverbindungsmittel aufeinander ausgeübt wird.

## Revendications

1. Véhicule comprenant un système de console centrale, le véhicule étant du type comprenant un habitacle et un tableau de bord (S) au niveau de la partie avant de l'habitacle, le système de console centrale comprenant :
- une première pièce d'ancrage (30) ancrée au plancher de l'habitacle,
- une console centrale comprenant un corps structurel (10), qui est défini par une portion avant et une portion arrière, dans lequel la portion avant est conçue pour être fixée au tableau de bord (S),
dans lequel la première pièce d'ancrage (30) et la portion arrière du corps structurel (10) comprennent des moyens de liaison pivotante respectifs conçus pour être reliés de manière pivotante l'un à l'autre, qui permettent au corps structurel (10) de pivoter dans son plan sagittal et, selon un mouvement de pivotement, de déplacer verticalement la portion avant du corps structurel (10) pour la relier au tableau de bord (S), le système de console centrale étant **caractérisé en ce que** l'un des moyens de liaison pivotante comprend deux guides (31) qui s'étendent dans une direction longitudinale du corps structurel (10) et les autres moyens de liaison pivotante comprennent deux pivots (111) coaxiaux qui s'étendent perpendiculairement à ladite direction longitudinale, dimensionnés pour former un seul axe de pivotement et coulisser à travers lesdits guides (31), de sorte que la liaison de pivotement se produit dans l'une quelconque des positions des pivots (111) dans les guides (31) respectifs.

2. Véhicule comprenant un système de console centrale selon la revendication 1, dans lequel chaque guide (31) s'étend sur un côté latéral de la première pièce d'ancrage (30), les deux guides (31) étant symétriques l'un par rapport à l'autre selon ledit plan sagittal.

3. Véhicule comprenant un système de console centrale selon la revendication 2, dans lequel chaque guide (31) définit une fente (312) allongée dans ladite direction longitudinale, la hauteur de ladite fente (312) étant sensiblement égale aux dimensions du pivot (111) respectif, de telle sorte que les fentes (312) limitent le déplacement vertical des pivots (111).

4. Véhicule comprenant un système de console centrale selon la revendication 3, dans lequel au moins un guide (31) comprend une entrée en forme d'entonnoir, pourvue d'une ouverture d'accès (311) dont la dimension verticale est supérieure à celle du pivot (111) respectif et d'une section de transition dont la dimension verticale diminue de celle de l'ouverture d'accès (311) jusqu'à celle de ladite fente (312) allongée au fur et à mesure qu'elle s'étend longitudinalement à partir de l'ouverture d'accès (311) vers ladite fente (312) allongée.

5. Véhicule comprenant un système de console centrale selon l'une quelconque des revendications précédentes, comprenant une seconde pièce d'ancrage (40) conçue pour être ancrée au plancher de l'habitacle, dans lequel la portion avant du corps structurel (10) et la seconde pièce d'ancrage (40) comprennent des moyens de liaison à ressort respectifs adaptés pour être reliés entre eux, une pression verticale étant exercée de telle sorte qu'elle génère un déplacement vers le haut de la portion avant du corps structurel (10) par rapport au plancher de l'habitacle.

6. Véhicule comprenant un système de console centrale selon la revendication 5, dans lequel des moyens de liaison à ressort respectifs sont conçus pour s'emboîter l'un dans l'autre et dévier la portion avant du corps structurel (10) dans une direction vers le haut lorsque le corps structurel (10) se déplace horizontalement vers l'avant par rapport au plancher de l'habitacle.

7. Véhicule comprenant un système de console centrale selon l'une quelconque des revendications 5 à 6, dans lequel l'un des moyens de liaison à ressort comprend une bride semi-rigide (41) avec au moins une portion oblique formant une rampe et les autres moyens de liaison à ressort comprennent une surface rigide (112).

8. Véhicule comprenant un système de console centrale selon l'une quelconque des revendications précédentes, dans lequel ladite au moins une portion de la portion avant du corps structurel (10) conçue pour être fixée au tableau de bord (S) est disposée au niveau d'une extrémité supérieure du corps structurel (10).

9. Véhicule comprenant un système de console centrale selon l'une quelconque des revendications précédentes, dans lequel ladite au moins une portion de la portion avant du corps structurel (10) conçue pour être fixée au tableau de bord (S) est disposée au niveau d'une extrémité avant du corps structurel (10).

10. Véhicule comprenant un système de console centrale selon l'une quelconque des revendications précédentes, dans lequel le corps structurel comprend :
- une pièce de cadre (11), qui est pourvue de l'un desdits moyens de liaison pivotante, et
- au moins une pièce de garniture supérieure (12) reliée mécaniquement à la pièce de cadre (11) et recouvrant au moins une partie supérieure de celle-ci.

11. Véhicule comprenant un système de console centrale selon la revendication 11, dans lequel la portion avant de la pièce de cadre (11) est conçue pour la relier au tableau de bord (S).

12. Procédé d'assemblage mis en œuvre pour assembler un système de console centrale selon l'une quelconque des revendications précédentes dans l'habitacle d'un véhicule avec un tableau de bord, **caractérisé en ce qu'**il comprend les étapes consistant à :
a) insérer les pivots (111) coaxiaux dans les guides (31) correspondants afin de relier la première pièce d'ancrage (30) au corps structurel (10), et
b) faire pivoter le corps structurel (10) dans son plan sagittal jusqu'à ce que la portion avant dudit corps structurel (10) vienne en contact avec le tableau de bord (S) pour la relier audit tableau de bord (S).

13. Procédé d'assemblage selon la revendication 12 d'un système de console centrale selon la revendication 2, dans lequel l'étape a) consiste à mettre les pivots (111) au niveau de l'entrée de guides respectifs (31) et à pousser le corps structurel (10) en le faisant glisser le long du plancher de l'habitacle selon une longitudinale du véhicule jusqu'à ce que la portion avant du corps structurel (10) vienne en contact avec le tableau de bord (S).

14. Procédé d'assemblage selon la revendication 13, mis en œuvre pour un système de console centrale selon la revendication 6 ou 7, dans lequel les étapes a) et b) sont mises en œuvre simultanément, le mouvement de pivotement étant causé par la pression verticale exercée par des moyens de liaison à ressort respectifs l'un par rapport à l'autre.
